# EUROPÄISCHE PATENTANMELDUNG

(11) **EP 1 522 874 A1**
(43) Veröffentlichungstag der Anmeldung: **13.04.2005**
(21) Anmeldenummer: 04400042.0
(22) Anmeldetag: 03.09.2004
(51) Int. Cl.: G01S 13/93, G01S 15/93, G01S 17/93, B60Q 1/48

(54) **Manövrierhilfe für Kraftfahrzeuge**

(30) Priorität: 06.10.2003 DE 10347168
(71) Anmelder: Valeo Schalter und Sensoren GmbH, 74319 Bietigheim-Bissingen (DE)
(72) Erfinder: Ziller, Thomas, 74354 Besigheim (DE); Gotzig, Heinrich, 74081 Heilbronn (DE)
(74) Vertreter: Meier, Christof

(57) **Zusammenfassung**

Vorgestellt wird eine Manövrierhilfe für Kraftfahrzeuge, mit einer Sensorik, die Informationen über Hindernisse im Umfeld des Kraftfahrzeugs erfasst, mit einem Anzeigegerät mit flächigem Display, auf dem die Informationen angezeigt werden.

Die Manövrierhilfe zeichnet sich dadurch aus, dass das Anzeigegerät ein Symbol für das Kraftfahrzeug aus einer Vogelperspektive zeigt und Symbole für die Hindernisse im Umfeld des Kraftfahrzeuges zeigt, wobei die Symbole für die Hindernisse auf dem flächigen Display in einer relativen Lage zum Symbol für das Kraftfahrzeug angeordnet sind, die ein Abbild der tatsächlichen Lage der Hindernisse relativ zu dem Kraftfahrzeug ist.

## Beschreibung

Die Erfindung betrifft eine Manövrierhilfe für Kraftfahrzeuge, mit einer Sensorik, die Informationen über Hindernisse im Umfeld des Kraftfahrzeugs erfasst und mit einem Anzeigegerät mit flächigem Display, auf dem die Informationen angezeigt werden.

Eine solche Manövrierhilfe ist per se bekannt. Bei der bekannten Manövrierhilfe werden Balkendiagramme zur Visualisierung von Abständen des Kraftfahrzeugs zu Hindernissen verwendet. Bekannt ist auch, alternativ oder ergänzend akustische Signale zu verwenden.

Solche Balkendiagramme oder akustische Signale vermitteln dem Autofahrer gewissermaßen ein eindimensionales, einen linienhaften Ausschnitt aus der Fahrzeugumgebung darstellendes Bild der Fahrzeugumgebung. Beim Manövrieren eines Fahrzeugs kommt es jedoch häufig nicht auf den linienhaft erfassten Abstand zu einem Objekt oder Hindernis an, sondern auf die Relativposition des Fahrzeugs zu mehreren Objekten in seiner Umgebung.

Für eine Manövrierhilfe, die den Fahrer beispielsweise beim Einparken entlasten soll, ist es darüber hinaus entscheidend wichtig, dass Sie dem Fahrer die notwendigen Informationen in einer Form zur Verfügung stellt, die ihm eine möglichst intuitive Erfassung der Situation ermöglicht.

Vor diesem Hintergrund besteht die Aufgabe der Erfindung in der Angabe einer Manövrierhilfe, die dem Fahrer eine intuitive Erfassung der Relativlage seines Kraftfahrzeuges relativ zu gegebenenfalls mehreren Objekten oder Hindernissen in seiner Umgebung ermöglicht.

Diese Aufgabe wird bei einer Manövrierhilfe der eingangs genannten Art dadurch gelöst, dass das Anzeigegerät ein Symbol für das Kraftfahrzeug aus einer Vogelperspektive zeigt und Symbole für die Hindernisse im Umfeld des Kraftfahrzeuges zeigt, wobei die Symbole für die Hindernisse auf dem flächigen Display in einer relativen Lage zum Symbol für das Kraftfahrzeug angeordnet sind, die ein Abbild der tatsächlichen Lage des Hindernisses relativ zu dem Kraftfahrzeug ist.

Mit diesen Merkmalen wird die Aufgabe vollkommen gelöst. Durch die Vogelperspektive erhält der Fahrer einen vollständigen Überblick über die Relativposition seines Kraftfahrzeugs in Bezug auf benachbarte Objekt oder Hindernisse unter Einschluss des eigenen Fahrzeugs. Er kann damit intuitiv abschätzen, wie sich seine Position gegebenenfalls gleichzeitig zu mehreren Objekten ändert.

Es ist bevorzugt, dass das Kraftfahrzeug auf dem Display in zentraler Lage dargestellt wird.

Durch diese Ausgestaltung wird eine Zentrierung der Darstellung auf das eigene Kraftfahrzeug erzielt, die eine Abbildung des gesamten Umfelds des Kraftfahrzeugs ermöglicht und die dem Fahrer eine schnelle und intuitive Einschätzung der Positionen verschiedener Objekte relativ zur Position des eigenen Kraftfahrzeugs erlaubt.

Bevorzugt ist auch, dass die Informationen wenigstens Informationen über Abstände der Hindernisse zum Kraftfahrzeug und über einen Winkel einer gedachten Verbindungslinie zwischen dem Hindernis und dem Kraftfahrzeug enthalten.

Durch diese Ausgestaltung kann der Fahrer Abstände und Richtung von Hindernissen oder Objekten noch besser einschätzen.

Ferner ist bevorzugt dass die Abmessungen des Symbols für das Kraftfahrzeug proportional zu den Abmessungen des Kraftfahrzeuges sind.

Diese Ausgestaltung erlaubt dem Fahrer eine intuitive Einschätzung von Abständen in Relation zu den Abmessungen seines Fahrzeuges. Da ihm die Abmessungen seines Fahrzeuges vertraut sind, kann er auch die bildlich dargestellten Abstände zu Hindernissen oder Objekten leicht einschätzen.

Eine weitere bevorzugte Ausgestaltung zeichnet sich dadurch aus, dass die Hindernisse flächig mit zu ihren realen Abmessungen proportionalen Abmessungen abgebildet werden.

Auch hier gilt, dass die proportionale Abbildung die intuitive Erfassung der Gesamtsituation begünstigt und darüber hinaus auch eine Antizipation einer Lageveränderung durch eine Lenkbewegung oder Fahrbewegung verbessert.

Ferner ist bevorzugt, dass die Manövrierhilfe die Symbole für die Hindernisse farbig darstellt.

Durch diese Ausgestaltung können kritische Abstände oder Positionen automatisch besonders hervorgehoben werden. Bei einer Vielzahl von Hindernissen oder Objekten erlaubt diese Ausgestaltung gewissermaßen eine Priorisierung der von jedem Objekt ausgehenden Gefahr.

Bevorzugt ist auch, dass die Farbe der farbigen Darstellung von Werten für die Abstände abhängig sind.

Durch diese Ausgestaltung kann die Aufmerksamkeit des Fahrers ohne irgendeine Aktivität des Fahrers besonders auf kritisch nahe Objekte fokussiert werden.

Dieser erwünscht Effekt kann noch dadurch verstärkt werden, dass die Helligkeit der farbigen Darstellung von Werten für die Abstände abhängig ist, dass ein Hindernis, dessen Abstand einen vorgegebenen Wert unterschreitet, blinkend dargestellt wird, oder dass die Darstellung eines Hindernisses, dessen Abstand einen vorgegebenen Wert unterschreitet, von einem akustischen Signal begleitet wird.

Eine weitere bevorzugte Ausgestaltung sieht vor, dass als Anzeigegerät ein Display eines Navigationssystems verwendet wird.

Durch eine solche Mehrfachnutzung eines ohnehin vorhandenen Displays kann die Erfindung mit verringertem Systemaufwand, Kostenaufwand und Einbauraumbedarf realisiert werden.

Ferner ist bevorzugt, dass die Sensorik wenigstens einen Radarsensor und/oder einen Ultraschallsensor und oder ein Kamerasystem und/oder eine mit sichtbarem Licht oder Infrarotwellenlängen arbeitende Sensorik aufweist.

Derartige Sensoren sind am Markt verfügbar und erlauben damit eine Realisierung der Erfindung ohne zusätzlichen Entwicklungsaufwand für eine spezielle Sensorik.

Bevorzugt ist auch, dass die Sensorik an einem Anhänger des Kraftfahrzeugs angebracht ist und ein Bild der Umgebung des Anhängers liefert.

Durch die Anordnung der Sensorik an einem Anhänger kann insbesondere die Position des Teils eines Gespanns aus Kraftfahrzeug und Anhänger angezeigt werden, die vergleichsweise am weitesten vom Fahrer entfernt ist und daher ohne Hilfsmittel vom Fahrer nur schwer einschätzbar ist. Außerdem reagiert ein Anhänger beim Rückwartsfahren anders auf eine Lenkbewegung als das Kraftfahrzeug, so dass eine zusätzliche visuelle Information über die Position des Anhängers relativ zu Hindernissen in seiner Umgebung den Fahrer besonders entlastet.

Eine weitere bevorzugte Ausgestaltung zeichnet sich dadurch aus, dass die Sensorik bei einem Kraftfahrzeug mit Anhänger einen weiteren Sensor aufweist, der einen Winkel zwischen einer Längsachse des Kraftfahrzeugs und einer Längsachse des Anhängers erfasst.

Durch diese Ausgestaltung können Winkel zwischen den genannten Längsachsen bei der Darstellung des Gespanns aus Kraftfahrzeug und Anhänger bei der visuellen Darstellung auf dem Display berücksichtigt werden, was die intuitive Erfassung der Gesamtsituation ebenfalls wesentlich verbessert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen:
- Fig. 1: schematisch ein Gespann aus einem Kraftfahrzeug und einem Anhänger in einer Manövriersituation aus einer Vogelperspektive;
- Fig. 2: schematisch eine Manövrierhilfe als Ausführungsbeispiel der Erfindung;
- Fig. 3: einen Radarsensor als Beispiel eines Sensors zur Erfassung der Umgebung eines Kraftfahrzeugs;
- Fig. 4: den Radarsensor aus der Fig. 3 im Teilschnitt; und
- Fig. 5: ein Flussdiagramm als Ausführungsbeispiel eines Verfahrens zur Erzeugung einer von Abständen zwischen Kraftfahrzeug und Hindernissen abhängigen Farbauswahl für die Darstellung der Hindernisse.

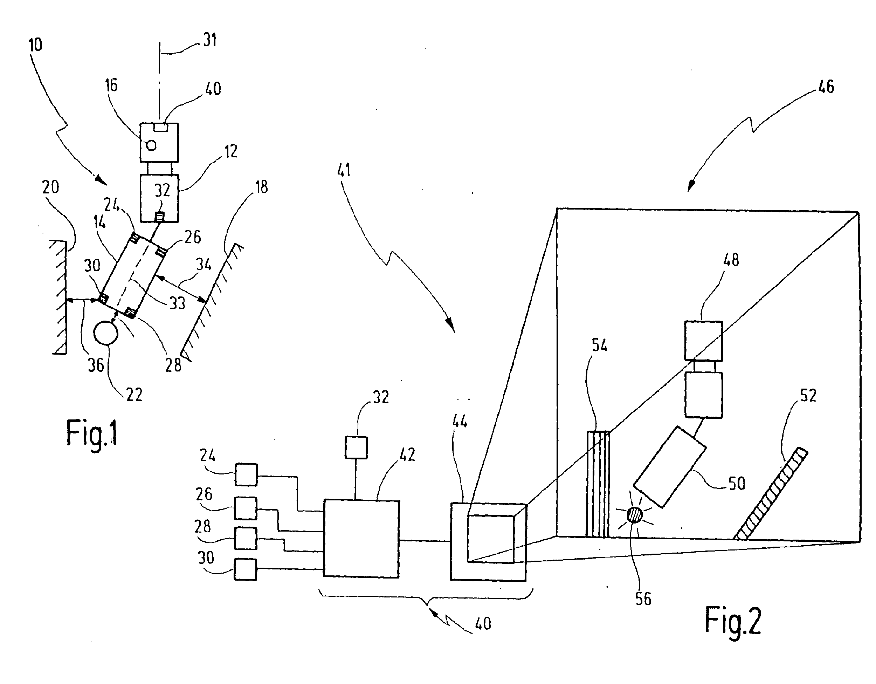

Die Figur 1 zeigt ein Gespann 10 aus einem Kraftfahrzeug 12 und einem Anhänger 14, das von einem Fahrer 16 rückwärts in einen Bereich mit einem ersten Hindernis 18, einem zweiten Hindernis 20 und einem dritten Hindernis 22 manövriert wird. Das Gespann 10 ist mit einer Sensorik ausgestattet, die Informationen über Hindernisse im Umfeld des Kraftfahrzeugs erfasst. Im Beispiel der Figur 1 besteht diese Sensorik aus vier Sensoren 24, 26, 28 und 30, die beispielsweise als Radarsensoren, Ultraschallsensoren, mit sichtbarem Licht oder Infrarotwellenlängen arbeitende Sensoren oder als Kameras realisiert sein können. Es versteht sich, dass die Zahl der Sensoren nicht auf vier beschränkt sein muss, sondern dass jede Zahl von Sensoren in Frage kommt, die dem Fahrer 16 ein Bild seiner Umgebung vermitteln kann.

Das in der Figur 1 dargestellte Gespann ist zusätzlich mit einem Winkelsensor 32 ausgestattet, der einen Winkel zwischen einer Längsachse 31 des Kraftfahrzeugs 12 und einer Längsachse 33 des Anhängers 14 erfasst. Die Signale der Sensoren 24, 26, 28 und 30 dienen insbesondere zur Erfassung von Abständen 34, 36 und 38 zu den Hindernissen 18, 20 und 22. Zur Bestimmung dieser Abstände können beispielsweise Laufzeiten der von den Sensoren 24, 26, 28 und 30 ausgehenden Signale bis zum Wiedereintreffen von reflektierten Signalen an diesen Sensoren verwendet werden.

Die Signale werden in einem Anzeigegerät 40 verarbeitet, das aus den Signalen ein Bild erzeugt, das ein Symbol für das Kraftfahrzeug 12 und/oder das Gespann 10 jeweils mit seiner Umgebung aus einer Vogelperspektive zeigt. Bei der Anzeige werden Symbole für das Kraftfahrzeug und/oder das Gespann 10 und Symbole für die Hindernisse auf einem flächigen Display so angeordnet, dass die Anordnung ein Abbild der tatsächlichen Lage der Hindernisse 18, 20 und 22 relativ zu dem Gespann 10 und/oder dem Kraftfahrzeug 12 darstellt.

Figur 2 zeigt eine Manövrierhilfe 41, die aus den genannten Sensoren 24 bis 32 und dem Anzeigegerät 40 besteht. Das Anzeigegerät 40 weist eine Auswertung 42 auf, in der die Signale der Sensoren 24 bis 32 ausgewertet und zu Bildsignalen umgewandelt werden, mit denen ein flächiges Display 44 angesteuert wird. Die Ziffer 46 bezeichnet das auf dem Display 44 sichtbare Bild, das ein Abbild der realen Situation nach der Figur 1 darstellt. Dabei erfolgt die Darstellung auf der Displayfläche 44 bevorzugt so, dass ein Symbol 48 für das Kraftfahrzeug 12 zentral in der Mitte des Bildes 46 angeordnet ist. Im Bild 46 ist weiter in Symbol 50 für den Anhänger 14, ein Symbol 52 für das erste Hindernis 18, ein Symbol 54 für das zweite Hindernis 20 und ein Symbol 56 für das dritte Hindernis 22 dargestellt.

Die Hindernisse werden bevorzugt farbig dargestellt, wobei die Farbe jeweils in Abhängigkeit vom Abstand des Hindernisses zum Kraftfahrzeug 12 und/oder Anhänger 14 ausgewählt wird. Die Auswahl kann beispielsweise so erfolgen, dass bei einem unkritisch großen Abstand, wie dem ersten Abstand 34 des Anhängers 14 zum ersten Hindernis 18, eine grüne Einfärbung des zugehörigen Symbols 52 gewählt wird. Bei einem kleineren Abstand, wie es beim zweiten Abstand 36 des Anhängers 14 zum zweiten Hindernis 20 der Fall ist, wird beispielsweise eine rote Einfärbung gewählt. Zusätzlich kann neben der Farbe auch die Helligkeit in Abhängigkeit von den Abständen beeinflusst werden, wobei die Helligkeit bevorzugt bei abnehmendem Abstand vergrößert wird.

Um dem Fahrer besonders kritisch verringerte Abstände besonders deutlich vor Augen zu führen, können die zugehörigen Symbole rot blinkend dargestellt werden. Dies ist in der Figur 2 beispielsweise bei dem Symbol 56 für das dritte Hindernis 22 der Fall. Es versteht sich, dass die in Verbindung mit Figur 2 beschriebene Zuordnung von Farben und Helligkeiten zu verschieden großen Abständen lediglich als Beispiel dient und dass statt der gewählten Zuordnung zum Beispiel auch andere Farben verwendet werden können. Außerdem kann selbstverständlich als Alternative zu einer zentralen Anordnung des Kraftfahrzeugs 12 auch der Anhänger 14 zentral im Bild 46 angeordnet werden. Als weitere Alternative kommt selbstverständlich auch eine dezentrale Anordnung des Gespanns 10, des Kraftfahrzeugs 12 und/oder des Anhängers 14 in Frage.

In ihrer elementarsten Form ist es für die Erfindung wesentlich, dass das Kraftfahrzeug 12, das Gespann 10 und/oder der Anhänger 14 aus einer Vogelperspektive zusammen mit den Hindernissen auf einem flächigen Display dargestellt werden. Dabei kann die Form der gewählten Symbole 48, 50, 52, 54 und 56 den tatsächlichen Formen der Objekte entsprechen. Alternativ kann aber sowohl das Kraftfahrzeug 12 (gegebenenfalls mit Anhänger 14) und/oder die Hindernisse in Form von einzelnen Punkten oder Ansammlungen von Punkten dargestellt werden.

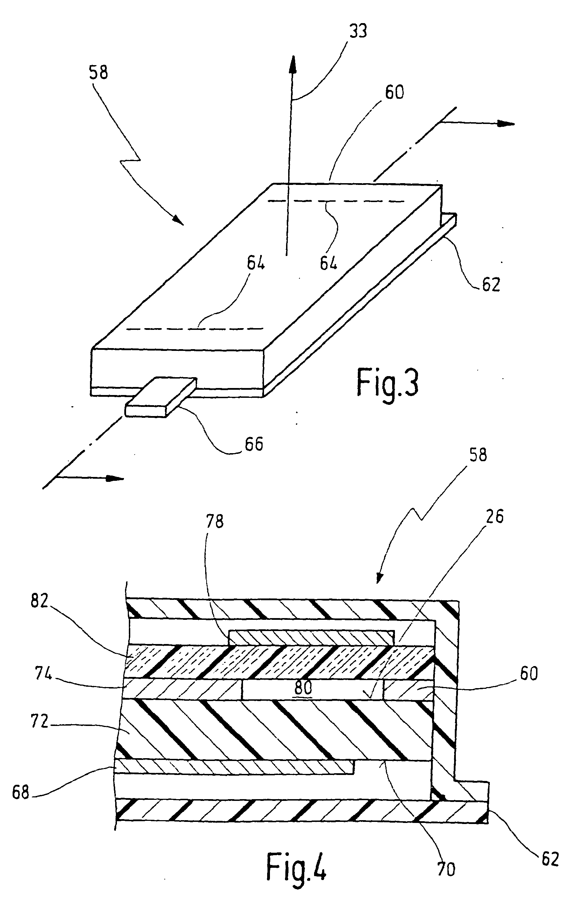

In der Figur 3 ist lediglich als Beispiel für einen der Sensoren 24 bis 30 ein Radarsensor 58 dargestellt, der von einem Gehäuse 60 und einem Deckel 62 umschlossen wird. Die gestrichelten Linien 64 geben die Ausrichtung oder Anordnung von einzelnen Strahlungsflächen innerhalb des Gehäuses 62 an. Die Ziffer 66 bezeichnet ein Anschlusselement, über das dem Radarsensor 56 beispielsweise eine Versorgungsspannung zugeführt wird und/oder über das der Radarsensor 58 Signale an die Auswertung 42, die beispielsweise als elektronisches Steuergerät realisiert sein kann, übergibt. Der mit der Ziffer 33 bezeichnete Pfeil gibt die Richtung der Längsachse 33 des Anhängers 14 an. Diese Orientierung des Radarsensors 58 relativ zur Richtung 33 der Längsachse stellt eine typische Einbaulage des Radarsensors 58 bei einer Kraftfahrzeug-Anwendung dar.

Figur 4 zeigt den Radarsensor 58 nach Figur 3 im Teilschnitt, wobei der in der Figur 4 dargestellte innere Aufbau des Radarsensors 58 per se bekannt ist. In der Figur 4 bezeichnet die Ziffer 68 ein Speisenetzwerk, das mit dem Anschlusselement 66 aus der Figur 3 in Verbindung steht, und auf der ersten Seite 70 eines Hochfrequenzsubstrates 72 angeordnet ist. Eine metallische Massefläche 74 ist auf einer zweiten Seite 76 des Hochfrequenzsubstrates 72 angeordnet. Der Radarsensor 58 weist ferner wenigstens eine Strahlungsfläche 78 (patch) auf, die über eine Apertur 80 in der metallischen Massefläche 74 und über ein zwischen der Massefläche 74 und der Strahlungsfläche 78 angeordnetes Dielektrikum 82 von dem Speisenetzwerk 68 zur Abstrahlung elektromagnetischer Wellen angeregt wird. Die Strahlungsfläche 78 ist auf einen Dielektrikum 82 angeordnet.

Im Betrieb des Radarsensors 58 wird für die Nahfeldüberwachung beispielsweise der Frequenzbereich um etwa 24 Gigaherz benutzt, in dem breitbandig ausgestrahlt werden darf. Ein breitbandiges Signal ist wünschenswert, da sich die örtliche Auflösung reflektierender Objekte, also der kleinstmögliche Abstand, bei dem zwei getrennte Objekte als getrennt erkannt werden, mit zunehmender Bandbreite verbessert. Zur weiteren Bandbreitenerhöhung werden die Radarsensoren 58 in der Regel gepulst betrieben, da sich die Signalbandbreite mit kürzer werdender Pulsbreite vergrößert. Bei der Nahfeldüberwachung kommt es auf eine hohe Ortsauflösung (Abstand und Winkel) an.

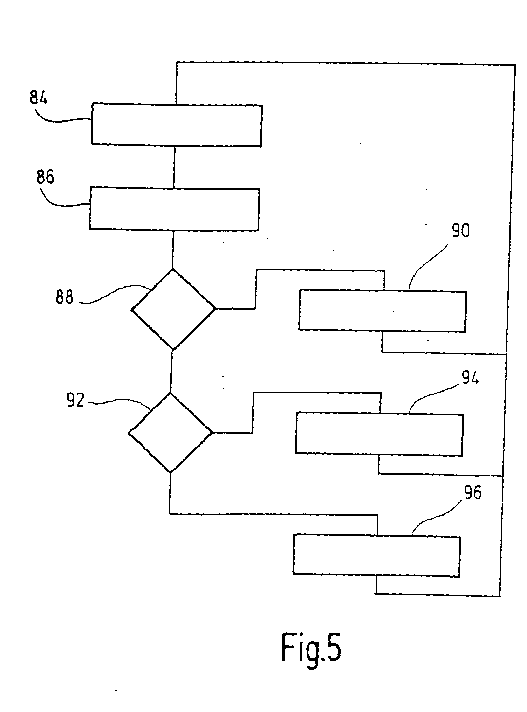

Figur 5 zeigt ein Flussdiagramm als Ausführungsbeispiel eines Verfahrens zur Erzeugung einer von Abständen zwischen Kraftfahrzeug 12, 14 und Hindernissen 18 abhängigen Farbauswahl für die Darstellung der Hindernisse. Dazu werden zunächst in einem Schritt 84 die Signale der Sensoren 24 bis 30 und 32 eingelesen und in einem Schritt 86 ausgewertet und dabei zu Ansteuersignalen für das flächige Display 44 umgeformt. Dabei schließt die Auswertung 86 insbesondere auch die Ermittlung der Abstände 34, 36 und 38 ein, wie sie in der Figur 1 als Beispiele von Abständen des Kraftfahrzeugs 12 oder des Anhängers 14 zu Hindernissen 18, 20 und 22 dargestellt sind.

Nach der Ermittlung dieser Abstände wird für jeden Abstand zu einem bestimmten Hindernis 18, 20 und 22 zunächst in einem Schritt 88 geprüft, ob dieser Abstand kleiner als ein erster Schwellenwert ist. Wenn die Abfrage verneint wird, erfolgt eine Verzweigung zum Schritt 90, indem beispielsweise die Farbe grün für die Darstellung des betreffenden Hindernisses ausgewählt wird. Im vorher erläuterten Beispiel ist dies für das erste Hindernis 18 der Fall, dessen Abstand 34 zum Anhänger 14 unkritisch groß ist. Nach der Farbauswahl im Schritt 90 wird erneut zum Programmbeginn (Schritt 84) zurückverzweigt, so dass die betreffende Schleife gegebenenfalls mehrfach durchlaufen wird.

Unterschreitet ein Abstand bei einem weiteren Durchlauf oder zu einem anderen Hindernis dagegen den ersten Schwellenwert im Schritt 88, schließt sich eine zweite Abfrage im Schritt 92 an, indem der Abstand mit einem kleineren, zweiten Schwellenwert verglichen wird. Wird dieser Schwellenwert nicht unterschritten, erfolgt eine Verzweigung zum Schritt 94, indem beispielsweise die Farbe gelb oder rot als Indikator für einen zwischen dem ersten Schwellenwert und zweiten Schwellenwert liegenden Abstand für die Darstellung des betreffenden Hindernisses ausgewählt wird. Anschließend verzweigt das Programm zurück zum Schritt 84, so dass auch diese Schleife gegebenenfalls mehrfach durchlaufen wird.

Wird die Abfrage im Schritt 92 dagegen verneint, bedeutet dies, dass der Abstand zu dem betreffenden Hindernis kleiner als ein kritischer Schwellenwert ist, bei dem beispielsweise akute Kollisionsgefahr besteht. In diesem Fall wird im Schritt 96 beispielsweise eine rot blinkende Darstellung für das betreffende Hindernis in der flächigen Anzeige ausgewählt.

## Patentansprüche

1. Manövrierhilfe (41) für Kraftfahrzeuge (10, 12), mit einer Sensorik (24, 26, 28, 30), die Informationen über Hindernisse (18, 20, 22) im Umfeld des Kraftfahrzeugs (10, 12) erfasst, mit einem Anzeigegerät (40) mit flächigem Display (44), auf dem die Informationen angezeigt werden, **dadurch gekennzeichnet, dass** das Anzeigegerät (40) ein Symbol (48) für das Kraftfahrzeug (10, 12) aus einer Vogelperspektive zeigt und Symbole (50, 52, 54) für die Hindernisse (18, 20, 22) im Umfeld des Kraftfahrzeuges (10, 12) zeigt, wobei die Symbole (18, 20, 22) für die Hindernisse auf dem flächigen Display (44) in einer relativen Lage zum Symbol (48) für das Kraftfahrzeug (10, 12) angeordnet sind, die ein Abbild der tatsächlichen Lage der Hindernisse (18, 20, 22) relativ zu dem Kraftfahrzeug (10, 12) ist.

2. Manövrierhilfe (41) nach Anspruch 1, **dadurch gekennzeichnet, dass** das Kraftfahrzeug (10, 12) auf dem Display (44) in zentraler Lage dargestellt wird.

3. Manövrierhilfe (41) nach Anspruch 1 oder 2, **dadurch gekennzeichnet, dass** die Informationen wenigstens Informationen über Abstände (34, 36, 38) der Hindernisse (18, 20, 22) zum Kraftfahrzeug (10, 12) und über einen Winkel einer gedachten Verbindungslinie zwischen dem Hindernis und dem Kraftfahrzeug enthalten.

4. Manövrierhilfe (41) nach wenigstens einem der vorhergehenden Ansprüche, **dadurch gekennzeichnet, dass** die Abmessungen des Symbols (48) für das Kraftfahrzeug (10, 12) proportional zu den Abmessungen des Kraftfahrzeuges (10, 12) sind.

5. Manövrierhilfe (41) nach wenigstens einem der vorhergehenden Ansprüche, **dadurch gekennzeichnet, dass** die Hindernisse (18, 20, 22) flächig mit zu ihren realen Abmessungen proportionalen Abmessungen abgebildet werden.

6. Manövrierhilfe (41) nach wenigstens einem der vorhergehenden Ansprüche, **dadurch gekennzeichnet, dass** die Symbole (52, 54, 56) für die Hindernisse (18, 20, 22) farbig dargestellt werden.

7. Manövrierhilfe (41) nach Anspruch 6, **dadurch gekennzeichnet, dass** die Farben der farbigen Darstellung von Werten für die Abstände (34, 36, 38) abhängig sind.

8. Manövrierhilfe (41) nach wenigstens einem der vorhergehenden Ansprüche, **dadurch gekennzeichnet, dass** die Helligkeit der farbigen Darstellungen von Werten für die Abstände (34, 36, 38) abhängig ist.

9. Manövrierhilfe (41) nach wenigstens einem der vorhergehenden Ansprüche, **dadurch gekennzeichnet, dass** ein Hindernis (22), dessen Abstand (38) einen vorgegebenen Wert unterschreitet, blinkend dargestellt wird.

10. Manövrierhilfe (41) nach wenigstens einem der Ansprüche 4 bis 9, **dadurch gekennzeichnet, dass** die Darstellung eines Hindernisses (22), dessen Abstand (38) einen vorgegebenen Wert unterschreitet, von einem akustischen Signal begleitet wird.

11. Manövrierhilfe (41) nach einem der vorhergehenden Ansprüche, **dadurch gekennzeichnet, dass** als Anzeigegerät (40) ein Display eines Navigationssystems verwendet wird.

12. Manövrierhilfe (41) nach einem der vorhergehenden Ansprüche, **dadurch gekennzeichnet, dass** die Sensorik (24, 26, 28, 30) wenigstens einen Radarsensor (58) und/oder einen Ultraschallsensor und oder ein Kamerasystem und oder eine mit sichtbarem Licht oder Infrarotwellenlängen arbeitende Sensorik aufweist.

13. Manövrierhilfe (41) nach wenigstens einem der vorhergehenden Ansprüche, **dadurch gekennzeichnet, dass** die Sensorik (24, 26, 28, 30) an einem Anhänger (14) des Kraftfahrzeugs (10, 12) angebracht ist und ein Bild der Umgebung des Anhängers (14) liefert.

14. Manövrierhilfe (41) nach wenigstens einem der vorhergehenden Ansprüche, **dadurch gekennzeichnet, dass** die Sensorik (24, 26, 28, 30) bei einem Kraftfahrzeug (12) mit Anhänger (14) einen weiteren Sensor (32) aufweist, der einen Winkel zwischen einer Längsachse (31) des Kraftfahrzeugs (12) und einer Längsachse (33) des Anhängers (14) erfasst.
